# EUROPÄISCHE PATENTSCHRIFT

(11) **EP 4 204 224 B1**
(45) Veröffentlichungstag und Bekanntmachung des Hinweises auf die Patenterteilung: **24.07.2024**
(21) Anmeldenummer: 21766682.5
(22) Anmeldetag: 30.08.2021
(51) Int. Cl.: B32B 7/12, B32B 27/08, B32B 27/34, B32B 27/36, B32B 27/30, C08L 53/02

(54) **SIEGELFÄHIGE MEHRSCHICHTFOLIE AUS STYROLPOLYMEREN MIT VERBESSERTEN ORGANOLEPTISCHEN EIGENSCHAFTEN**
SEALABLE MULTILAYER FILM MADE OF STYRENE POLYMERS WITH IMPROVED ORGANOLEPTIC PROPERTIES
FILM MULTICOUCHE SCELLABLE EN POLYMÈRES DE STYRÈNE AUX PROPRIÉTÉS ORGANOLEPTIQUES AMÉLIORÉES

(30) Priorität: 31.08.2020 EP 20193641
(43) Veröffentlichungstag der Anmeldung: 05.07.2023
(73) Patentinhaber: INEOS Styrolution Group GmbH, 60325 Frankfurt (DE)
(72) Erfinder: NIESSNER, Norbert, 67159 Friedelsheim (DE); VAN VEEN, Yvonne, 1422PC Uithoorn (NL)
(74) Vertreter: Jacobi, Markus Alexander
(86) Internationale Anmeldenummer: PCT/EP2021/073875
(87) Internationale Veröffentlichungsnummer: WO 2022/043548

(56) Entgegenhaltungen:
- EP-A2- 0 406 681
- EP-A2- 0 437 745
- WO-A1-93/17068
- BE-A3- 1 010 747
- DE-A1- 3 531 036
- WITTENBERG ELISABETH ET AL: "Hydrogen bonding and thermoplastic elastomers - a nice couple with temperature-adjustable mechanical properties", SOFT MATTER (PRINT), vol. 14, no. 14, 19 March 2018 (2018-03-19), GB, pages 2701 - 2711, XP055865594, ISSN: 1744-683X, Retrieved from the Internet <URL:https://pubs.rsc.org/en/content/articlepdf/2018/sm/c8sm00296g> DOI: 10.1039/C8SM00296G

## Beschreibung

Die Erfindung betrifft eine heißsiegelfähige Mehrschichtfolie enthaltend eine siegelfähige Schicht auf Basis von Styrolpolymer(en), sowie ein Verfahren zu ihrer Herstellung und ihre Verwendung für Behälter aus Styrolpolymer(en).

Kunststoffbehälter für die Verpackung von Lebensmitteln müssen in vielen Fällen luftdicht verschlossen werden, um deren Haltbarkeit sicherzustellen. Als Verschluss werden in vielen Fällen, insbesondere bei der Verpackung von Molkereiprodukten, Aluminiumfolien verwendet, auf die ein Siegellack aufgetragen wird, der eine ausreichende Haftung auf den verschiedenen Arten von Kunststoffbehältern sicherstellt. Außer Aluminiumfolien werden auch Kunststoff-Folien verwendet, die mit einem siegelfähigen Lack versehen werden.

Die siegelfähigen Kunststoff-Folien können im Gegensatz zu den Alufolien auch thermogeformt werden. So ist es möglich, bei Verwendung von Kunststofffolien daraus geformte Deckel herzustellen, die ebenfalls auf das zu verschließende Behältnis "aufgesiegelt" werden, die aber nach Öffnen der Verpackung geeignet sind, diese wieder nach Entnahme eines Teiles des Inhaltes zur weiteren Aufbewahrung zu verschließen.

Je nach der Art des Kunststoffes, aus dem der zu siegelnde Behälter hergestellt ist, verwendet man entsprechende Siegellacke. So bringt man z.B. auf siegelfähigen Folien aus Hart-PVC eine Siegellackschicht auf Basis eines Acrylat-Harzes auf, dem zur Regulierung der Haftfestigkeit und des Aufschmelzpunktes noch Zusatzstoffe beigegeben werden.

Bei der Verwendung von heißsiegelfähigen Kunststoff-Folien hat sich gezeigt, dass sie, verglichen mit den Aluminiumfolien eine wesentlich engere Verarbeitungsbreite haben. Sind Siegeltemperatur und Siegelzeit zu niedrig, so erlaubt die Kunststoff-Folie keinen ausreichenden Wärmedurchgang und die Folie haftet nicht. Stellt man Siegeltemperatur und Siegelzeit zu hoch ein, so schmilzt die Kunststoff-Folie auf und fließt unter dem zur Siegelung notwendigen Druck weg. Sie wird dann im Siegelbereich so dünn, dass sie schon bei geringer Belastung reißt, und ein einwandfreies Öffnen und Wiederverschließen der Verpackung nicht mehr möglich ist.

Zwischen diesen beiden Grenzbedingungen der Siegelung besteht bei den siegelfähigen Kunststoff-Folien meist nur ein enger Bereich von 10 bis 20°C. Dieser sollte sicher eingehalten werden, um eine störungsfreie Produktion und einen einwandfreien Gebrauch der versiegelten Verpackung sicherzustellen. Die Praxis hat gezeigt, dass dies in einer Reihe von Fällen möglich ist. Insbesondere bei Abfüllanlagen, bei denen gleichzeitig mehrere Becher versiegelt werden, ist eine ausreichend sichere Temperaturregelung nicht immer gewährleistet, da Temperaturunterschiede von mehr als 20°C zwischen den verschiedenen Kavitäten keine Ausnahme sind.

Siegelfähige Folien aus PVC haben einige Nachteile. Sie sind, da sie mit einem Siegellack zu versehen sind, verhältnismäßig teuer. Zudem sind die von der Siegelschicht herrührenden Restlösungsmittel aus dem Kunststoff nur mit erheblichem Aufwand zu entfernen. Dazu kommt, dass aus Gründen des Umweltschutzes in einigen Ländern zunehmend die Neigung besteht, PVC für Wegwerfverpackungen durch andere Thermoplaste zu ersetzen.

So wird schon seit Jahren versucht, heißsiegelfähige Folien aus Polystyrol herzustellen. Dies ist insbesondere daran gescheitert, dass es mit den bekannten Klebern nicht gelang, Siegelbedingungen einzuhalten, die die Polystyrol-Folie nicht schädigen. Stets muss die Polystyrol-Folie im Siegelbereich so stark erhitzt werden, dass sie dort erweicht und unter dem zur Siegelung notwendigen Druck wegfließt. Sie wird dann im Siegelbereich so dünn, dass sie schon bei geringer Belastung reißt und ein einwandfreies Öffnen der Verpackung nicht mehr möglich ist.

In DE 32 48 746 sind Formmassen zur Verwendung als transparente Verpackungsmittel auf Basis von Polystyrol-Harzen, Blockcopolymeren und Schmiermitteln beschrieben.

In DE-A-35 31 036 werden zweilagige heißsiegelfähige Polymerfolien beschrieben, die aus einer siegelfähigen Schicht aus einer Mischung von 20 bis 80 Gew.-% schlagzähem Polystyrol, 5 bis 70 Gew.-% eines Vinylaromat-Dien-Blockcopolymers und 8 bis 30 Gew.-% eines Gleitmittels, sowie einer Trägerschicht aus z.B. Styrol-Butadien-Blockcopolymeren aufgebaut sind.

EP-B 0406681 beschreibt mindestens zweilagige heißsiegelfähige Polymerfolien umfassend 1 bis 50 Gew.-% einer heißsiegelbaren Schicht A enthaltend 20 bis 80 Gew.-% eines schlagfesten Polystyrols A1, 5 bis 70 Gew.-% eines Vinylaromat-Dien-Blockcopolymers A2 und 8 bis 30 Gew.-% eines Schmiermittels A3; 0 bis 95 Gew.-% einer Trägerschicht B enthaltend thermoplastisch verarbeitbare Stoffe basierend auf Styrol und Butadien (z.B. HIPS); und 1 bis 99 Gew.-% einer von B verschiedenen Polymerschicht C, die bei über 200 °C (Beispiele: Polyamid 6,6) schmilzt.

In allen Beispielen wird zusätzlich eine Schicht D als Haftvermittler von A und C verwendet. Das Blockcopolymer A2 enthält einen Dien-Homopolymer-Block; beispielhaft werden elastomere Styrol-Butadien-Triblockcopolymere (Butadiengehalt 72 Gew.-%) verwendet. Die vorgenannten heißsiegelfähigen Polymerfolien haben den Nachteil, dass es bei der Verpackung von geschmackssensitiven Lebensmitteln zu einer Geschmacksbeeinträchtigung kommen kann.

BE1010747A3 offenbart eine monoschichtige, heißsiegelbare Folie mit verbesserten organoleptischen Eigenschaften.

Eine Aufgabe der vorliegenden Erfindung ist es, heißsiegelfähige Folien auf Basis von Styrolpolymer(en) mit verbesserten organoleptischen Eigenschaften zu entwickeln, deren Siegelschicht zudem frei von Lösungsmitteln ist. Darüber hinaus sollte die Folie durch Coextrusion herstellbar sein.

Darüber hinaus sollen solche Folien z.B. die Forderung erfüllen, dass sie auch auf Abfüllanlagen, bei denen auf mehreren Kavitäten gleichzeitig gefüllte Becher versiegelt werden, eine einwandfreie Produktion ermöglichen. Das bedeutet - da der Temperaturbereich der Verarbeitung wegen der geringen Wärmeleitfähigkeit der Kunststoff-Folien nach unten nicht erweitert werden kann - dass durch geeignete Maßnahmen erreicht werden muss, dass auch bei höheren Siegeltemperaturen noch eine einwandfreie Versiegelung und auch ein problemloses Verhalten der versiegelten Verpackung im Gebrauch sichergestellt wird.

Es wurde nun überraschend gefunden, dass sich die organoleptischen Eigenschaften durch die Verwendung einer heißsiegelbaren Polymerschicht mit einer spezifischen Morphologie verbessern lassen.

Ein Gegenstand der Erfindung ist eine heißsiegelbare Mehrschichtfolie umfassend:
a) 1 bis 50 Gew.-% einer heißsiegelbaren Polymerschicht (A),
c) 1 bis 99 Gew.-% einer Polymerschicht (C), und
b) 0 bis 95 Gew.-% einer Polymerschicht (B),

wobei sich, falls vorhanden, Polymerschicht (B) zwischen Polymerschicht (A) und Polymerschicht (C) befindet, und die Anteile a), b) und c) sich jeweils auf das Gesamtgewicht der Folie beziehen, und wobei
Polymerschicht (A) enthält (oder besteht aus):
   A1) 20 bis 90 Gew.-% - bezogen auf Gesamtgewicht (A) - mindestens eines schlagfesten Polystyrols (A1),
   A2) 5 bis 50 Gew.-% - bezogen auf Gesamtgewicht (A) - mindestens eines Vinylaromat-Dien-(insbesondere Styrol-Butadien) Blockcopolymers (A2); und
   A3) 0 bis 30 Gew.-% - bezogen auf Gesamtgewicht (A) - mindestens eines Gleit- und/oder Schmiermittels (A3), und
   A4) 0 bis 10 Gew.-% - bezogen auf Gesamtgewicht (A) - von A3) verschiedene - Additive und/oder Hilfsmittel (A4);
und wobei Polymerschicht (B) von (A) und (C) verschieden ist und mindestens eine Komponente (B1), ausgewählt aus der Gruppe bestehend aus: schlagfestem Polystyrol, Vinylaromat-Dien-(insbesondere Styrol-Butadien) Blockcopolymeren, und Mischungen aus Styrol-Homopolymeren oder Vinylaromat-Dien-(insbesondere Styrol-Butadien) Pfropf-copolymeren mit Vinylaromat-Dien-(insbesondere Styrol-Butadien) Blockcopolymeren, enthält; und wobei
Polymerschicht (C) von (A) und (B) verschieden ist und eine Schmelztemperatur von mindestens 170°C aufweist; und wobei
Polymerschicht (A)
   (i) 66 bis 99 Vol.-% einer Hartphase enthaltend Struktureinheiten von mindestens einem Vinylaromatmonomer, insbesondere Styrol, und
   ii) 1 bis 34 Vol.-% einer Weichphase enthaltend Struktureinheiten von mindestens einem konjugierten Dien, insbesondere Butadien, umfasst;
und wobei die Weichphase ii) in Form von Kugeln und/oder Zylindern vorliegt, die von der Hartphase umgeben sind.

Der Volumenanteil der beiden Phasen kann mittels hochauflösender Elektronenmikroskopie oder Festphasen NMR-Spektroskopie bestimmt werden.

Unter der Hartphase (i) der Polymerschicht (A) ist die gesamte aus den Komponenten (A1) und (A2) gebildete Hartphase zu verstehen.

Die Hartphase (i) enthält im Allgemeinen 85 bis 100 Gew.-%, bevorzugt 90 bis 100 Gew.-%, Struktureinheiten von mindestens einem Vinylaromat, insbesondere Styrol, und gegebenenfalls 0 bis 15 Gew.-%, bevorzugt 0 bis 10 Gew.-% Struktureinheiten von mindestens einem Vinylaromatmonomer, insbesondere Styrol.

Unter der Weichphase (ii) der Polymerschicht (A) ist die gesamte aus den Komponenten (A1) und (A2) gebildete Weichphase zu verstehen.

Die Weichphase (ii) enthält im Allgemeinen mindestens 30 Gew.-%, bevorzugt mindestens 50 Gew.-% Struktureinheiten von mindestens einem konjugierten Dien, insbesondere Butadien, und gegebenenfalls bis zu 70 Gew.-%, bevorzugt bis zu 50 Gew.-% Struktureinheiten von mindestens einem Vinylaromat-Monomer, insbesondere Styrol, enthalten.

Bevorzugt ist die Weichphase aus Dien- und Vinyl-aromatischen Struktureinheiten, insbesondere Styrol, aufgebaut. Oft enthält die Weichphase 30 bis 70 Gew.-% Struktureinheiten von mindestens einem konjugierten Dien, insbesondere Butadien, und 30 bis 70 Gew.-% Struktureinheiten von mindestens einem Vinylaromatmonomer, insbesondere Styrol.

### "Butadien" bedeutet 1,3-Butadien.

Die Summe der Komponenten A1) und A2), sowie, falls vorhanden, A3) und/oder A4) ergibt 100 Gew.-%.

Die vorgenannte Polymerschicht (A) umfasst bevorzugt
i) 86 bis 99 Vol.-% einer Hartphase, bezogen auf (A), enthaltend Struktureinheiten von mindestens einem Vinylaromatmonomer, insbesondere Styrol, und
ii) 1 bis 14 Vol.-% einer Weichphase, bezogen auf (A), enthaltend Struktureinheiten von mindestens einem konjugierten Dien, insbesondere Butadien.

Bevorzugt sind heißsiegelbare Mehrschichtfolien, in denen die Polymerschicht (B) vorhanden ist.

Bevorzugte erfindungsgemäße Mehrschichtfolien umfassen:
(a) 3 bis 30 Gew.-% Polymerschicht (A),
(b) 50 bis 90 Gew.-% Polymerschicht (B), und
(c) 1 bis 30 Gew.-% Polymerschicht (C).

Besonders bevorzugte erfindungsgemäße Mehrschichtfolien umfassen:
(a) 3 bis 15 Gew.-% Polymerschicht (A),
(b) 60 bis 90 Gew.-% Polymerschicht (B), und
(c) 5 bis 15 Gew.-% Polymerschicht (C).

Die Kunststoff-Folie kann zusätzlich noch (d) bis zu 10 Gew.-%, bevorzugt 1 bis 10 Gew.-%, bezogen auf das Gesamtgewicht der Folie, einer weiteren - von (A) bis (C) verschiedenen - Polymerschicht (D) umfassen.

Die Summe aus (a) und (c), sowie falls vorhanden, (b) und/oder (d) ergibt 100 Gew.-%.

Polymerschicht (D), falls vorhanden, befindet sich zwischen (A) und (C) oder (B) und (C).

### Polymerschicht (A)

Polymerschicht (A) der erfindungsgemäßen Mehrschichtfolie hat insbesondere die Eigenschaft, heißsiegelfähig zu sein. Sie ist daher gut geeignet für den Verbund mit einer Trägerfolie.

Gemäß der Erfindung liegt die Weichphase ii) - enthaltend Struktureinheiten von mindestens einem konjugierten Dien - der Polymerschicht (A) in Form von Kugeln und/oder Zylindern dispergiert in der Hartphase i) - enthaltend Struktureinheiten von mindestens einem Vinylaromat-Monomer - vor. Erfindungsgemäß ist die dominierende Morphologie der Weichphase ii) nicht lamellar. Die Morphologie ist kugel- und/oder zylinderförmig; erfindungsgemäß ist auch eine Misch-Morphologie aus Zylindern und/oder Kugeln und Lamellen, wobei der Anteil der Lamellen kleiner 50 Volumen-% - bezogen auf das Gesamtvolumen von Zylindern/Kugeln und Lamellen - ist. Erfindungsgemäß ist die Weichphase ii) diskontinuierlich und weist Segmente enthaltend Dien-Struktureinheiten (Anteil Dien-Struktureinheiten: mindestens 30 Gew.-%, bevorzugt mindestens 50 Gew.-%) von kugelförmiger und/oder zylindrischer Morphologie auf.

Die Weichphase ii) liegt bevorzugt in Form von Kugeln und/oder Zylindern und gegebenenfalls - mit einem Anteil von weniger als 50 Vol.-% - Lamellen vor, die jeweils einen mittleren Durchmesser von 20 bis 200 nm, bevorzugt 25 bis 150 nm, insbesondere 30 bis 100 nm, aufweisen. Der vorgenannte mittlere Durchmesser wird bestimmt durch Auszählen einer kontrastierten elektronenmikroskopischen Aufnahme.

Überraschend wurde nun gefunden, dass die für die erfindungsgemäße Mehrschichtfolie verwendete heißsiegelbare Polymerschicht A - mit einer Zusammensetzung, Weichphase und Morphologie wie zuvor beschrieben - verbesserte organoleptische Eigenschaften aufweist.

Polymerschicht (A) enthält (oder besteht aus) im Allgemeinen:
A1) 20 bis 90 Gew.-% - bezogen auf (A) - mindestens eines schlagfesten Polystyrols (A1),
A2) 5 bis 50 Gew.-% - bezogen auf (A) - mindestens eines Vinylaromat-Dien-(insbesondere Styrol-Butadien) Blockcopolymers (A2); und
A3) 0 bis 30 Gew.-% - bezogen auf (A) - mindestens eines Gleit-oder Schmiermittels (A3), und
A4) 0 bis 10 Gew.-% - bezogen auf (A) - Additive und/oder Hilfsmittel (A4), insbesondere z.B. Stabilisatoren.

Polymerschicht (A) enthält (oder besteht aus) bevorzugt:
A1) 40 bis 90 Gew.-% - bezogen auf (A) - mindestens eines schlagfesten Polystyrols (A1),
A2) 10 bis 40 Gew.-% - bezogen auf (A) - mindestens eines Vinylaromat-Dien-(insbesondere Styrol-Butadien) Blockcopolymers (A2); und
A3) 0 bis 20 Gew.-% - bezogen auf (A) - mindestens eines Gleit-oder Schmiermittels (A3), und
A4) 0 bis 5 Gew.-% - bezogen auf (A) - Additive und/oder Hilfsmittel (A4), insbesondere z.B. Stabilisatoren.

Polymerschicht (A) enthält (oder besteht aus) besonders bevorzugt:
A1) 65 bis 85 Gew.-% - bezogen auf (A) - mindestens eines schlagfesten Polystyrols (A1),
A2) 15 bis 35 Gew.-% - bezogen auf (A) - mindestens eines Vinylaromat-Dien-(insbesondere Styrol-Butadien) Blockcopolymers (A2); und
A3) 0 bis 15 Gew.-% - bezogen auf (A) - mindestens eines Gleit-oder Schmiermittels (A3), und
A4) 0 bis 2 Gew.-%, bevorzugt 0,01 bis 2 Gew.-%, - bezogen auf (A) - Additive und/oder Hilfsmittel (A4), insbesondere z.B. Stabilisatoren.

Polymerschicht (A) enthält (oder besteht aus) ganz besonders bevorzugt:
A1) 65 bis 75 Gew.-% - bezogen auf (A) - mindestens eines schlagfesten Polystyrols (A1),
A2) 25 bis 35 Gew.-% - bezogen auf (A) - mindestens eines Vinylaromat-Dien-(insbesondere Styrol-Butadien) Blockcopolymers (A2); und
A3) 0 bis 15 Gew.-% - bezogen auf (A) - mindestens eines Gleit-oder Schmiermittels (A3), und
A4) 0 bis 2 Gew.-%, bevorzugt 0,01 bis 2 Gew.-%, - bezogen auf (A) - Additive und/oder Hilfsmittel (A4), insbesondere z.B. Stabilisatoren.

### Komponente (A1)

Komponente A1 ist schlagfestes Polystyrol ("HIPS = High Impact Polystyrene"). Darunter ist ein zweiphasiges aus einer Hartmatrix (Hartphase) und einer Weichphase aufgebautes Polystyrol zu verstehen.

Auch eine Mischung aus schlagfestem Polystyrol ("HIPS") und nicht schlagzäh modifiziertem Polystyrol ("GPPS = General Purpose Polystyrene") fällt unter die Definition von Komponente A1. Falls als Komponente A1 vorgenannte Mischung eingesetzt wird, beträgt der Anteil an schlagfestem Polystyrol vorzugsweise mehr als 50 Gew.-%, insbesondere mehr als 70 Gew.-%.

Bevorzugt wird als Komponente A1 schlagfestes Polystyrol allein eingesetzt.

Die Hartmatrix (Hartphase) der Komponente A1 besteht aus einem oder mehreren Styrol-Polymeren. Der Anteil der Hartmatrix, bezogen auf die Komponente A1, beträgt 60 bis 95 Gew.-%, vorzugsweise 80 bis 95 Gew.-%. Als Monomeres zum Aufbau der Hartmatrix kommt insbesondere Styrol in Frage. Es können jedoch auch α-Methylstyrol oder p-Methylstyrol oder Mischungen substituierter Styrole verwendet werden, bevorzugt ist jedoch die ausschließliche Verwendung von Styrol, so dass die Hartmatrix bevorzugt aus Polystyrol besteht.

Die Hartmatrix der Komponente A1 entsteht in an sich bekannter Weise bei der Herstellung der Komponente A1 dadurch, dass eine Weichphase, d.h. mindestens ein Kautschuk z.B. ein Polydien und/oder mindestens ein linear oder sternförmig aufgebautes elastomeres Vinylaromat/Dien-Blockcopolymer, insbesondere lineares Vinylaromat/Dien-Zweiblockcopolymer, zusammen mit dem die Hartmatrix später aufbauenden Styrol-Monomeren thermisch oder radikalisch polymerisiert wird. Dabei bilden sich Pfropfcopolymere des Kautschuks (Weichphase) und ungepfropfte StyrolPolymere, die Hartmatrix.

Die Hartmatrix kann eine Viskositätszahl ηsp/c im Bereich von 50 bis 140, insbesondere im Bereich von 70 bis 120, aufweisen. Dies entspricht mittleren Molgewichten (Mw) im Bereich von 100.000 bis 350.000 g/mol, insbesondere 150.000 bis 300.000 g/mol.

Die Weichphase der Komponente A1 liegt fein dispergiert in der Hartmatrix der Komponente A1 vor. Die Art und Weise, wie eine Weichphase in einer Hartmatrix dispergiert werden kann, ist bekannt. Die Weichphase der Komponente A1 ist in einem Anteil von 5 bis 40 Vol.%, vorzugsweise von 5 bis 20 Vol.-%, insbesondere 5 bis 14 Vol.%, in der Hartmatrix der Komponente A1 vorhanden. Sie weist eine mittlere Teilchengröße im Bereich von 0,3 bis 10 µm, vorzugsweise im Bereich von 0,5 bis 8 µm auf. Bei dem genannten Teilchengrößenbereich handelt es sich um die mittlere Teilchengröße, bestimmt durch Auszählen einer elektronenmikroskopischen Aufnahme, also ein Zahlenmittel.

Bei der Weichphase handelt es sich somit um ein Pfropfcopolymer aus dem(n) Monomeren der Hartmatrix, d.h. insbesondere von Styrol, auf mindestens einen Kautschuk und/oder mindestens ein elastomeres linear oder sternförmig aufgebautes Vinylaromat/Dien-Blockcopolymer, wie z.B. Polybutadien und/oder ein elastomeres linear oder sternförmig aufgebautes Styrol-Butadien-Blockcopolymer.

Als Weichphase ist Polybutadien und dessen Pfropfcopolymer mit Styrol bevorzugt. Besonders geeignet sind Polybutadiene und elastomere Styrol-Butadien-Blockcopolymere vom medium- oder high-cis-Typ mit Molekulargewichten im Bereich von 50.000 bis 450.000 (Gewichtsmittel). Vorzugsweise werden medium-cis-Polybutadiene mit Molgewichten von 100.000 bis 400.000 eingesetzt.

Als Weichphase ebenfalls gut geeignet ist ein elastomeres lineares oder sternförmig aufgebautes Vinylaromat/Dien-Blockcopolymer bzw. dessen Pfropfcopolymer mit Styrol. Das elastomere Vinylaromat/Dien-Blockcopolymer kann ein Di-, Tri- oder Multi-Blockcopolymer, bevorzugt ein lineares Diblockcopolymer, sein.

Elastomere lineare oder sternförmig aufgebaute Blockcopolymere erhält man durch anionische Polymerisation mit Hilfe von Lithiuminitiatoren. Als vinylaromatische Monomere zum Aufbau des ersten Blockes kommen Styrol und substituierte Styrole in Betracht. Genannt seien Styrol, das bevorzugt alleine verwendet wird, o-, m- und p-Methylstyrol. Der zweite Block des Blockcopolymers ist vorzugsweise nur aus Butadien aufgebaut.

Bevorzugt werden elastomere Diblockcopolymere verwendet. Ein solches Diblockcopolymer kann z.B. einen Blockpolystyrolgehalt von 40 bis 90 Gew.-%, bezogen auf das Blockcopolymer, aufweisen (Rest jeweils Butadien). Es handelt sich bei dem genannten Blockcopolymer um ein solches mit sogenanntem scharfem Übergang. Es ist z.B. aus A. Echte, Angew. Makr. Chemie 58/59 175 (1977) bekannt, wie derartige Blockcopolymere erhalten werden können. Das Blockcopolymer soll ein mittleres Molekulargewicht (Mw) von 100.000 bis 300.000, vorzugsweise von 150.000 bis 250.000, aufweisen.

Falls Gemische aus Polydienen und elastomeren, linear oder sternförmig aufgebauten Blockcopolymeren als Kautschuk verwendet werden, berechnet sich der Gesamtpolydienanteil aus dem Anteil z.B. des Polybutadiens und z.B. aus dem Butadienanteil, der in dem Blockcopolymer, insbesondere Diblockcopolymer, enthalten ist. Dieser Gesamtpolydienanteil soll, bezogen auf die Komponente A1, im Bereich von 2 bis 30 Gew.-%, vorzugsweise 4 bis 15 Gew.-%, liegen.

Als praktisches Beispiel diene das folgende: Eine Mischung aus 8 Gew.-% Styrol-Butadien-Diblockcopolymer mit einem Butadiengehalt von 50 Gew.-% und 6 Gew.-% Homo-Polybutadien werden angewendet. Der Gesamtpolybutadienanteil beträgt dann 8 x 0.5 = 4 Gew.-% Polybutadien aus dem Diblockcopolymer und 6 Gew.-% aus dem Homopolymer des Butadiens, so dass der Gesamtpolybutadienanteil 10 Gew.-% ausmacht.

Besonders bevorzugt werden schlagfeste Polystyrolharze, die nach den in der DE-A-17 70 392 beschriebenen Verfahren hergestellt werden, oder solche, die besonders gute Spannungsrissbeständigkeit aufweisen (vgl. DE-A-25 25 019). Auch die Verwendung schlagfesten Polystyrols mit transluzenten Eigenschaften, wie es z.B. in der DE-A-26 13 352 beschrieben ist, ist möglich.

### Komponente (A2)

Vinylaromat-Dien-Blockcopolymer A2 (= Komponente (A2)) ist aufgebaut aus mindestens einem - eine Hartphase bildenden - Block S enthaltend (oder bestehend aus) Struktureinheiten von mindestens einem vinylaromatischen Monomer, insbesondere aus der Gruppe von Styrol, α-Methylstyrol, kernalkyliertem Styrol wie p-Methylstyrol oder den Mischungen hieraus, ganz besonders bevorzugt Styrol, und mindestens einem - eine Weichphase bildenden - Block B und/oder Block B/S, bevorzugt Block B/S, enthaltend Struktureinheiten von einem konjugierten Dien, insbesondere von Butadien und/oder Isopren, vorzugsweise Butadien. Block B/S enthält ferner Struktureinheiten von mindestens einem vinylaromatischen Monomer - wie zuvor erwähnt -, insbesondere Styrol.

Block B/S ist vorzugsweise statistisch aufgebaut.

Bevorzugt enthält das Blockcopolymer A2 keinen Block B, sondern einen oder mehrere, vorzugsweise statistisch aufgebauten, Block B/S bestehend aus Struktureinheiten von einem konjugierten Dien, insbesondere Butadien, und Struktureinheiten von mindestens einem vinylaromatischen Comonomeren, insbesondere Styrol.

Das Blockcopolymere kann aus 2, 3 oder mehr Blöcken bestehen, es kann linear oder sternförmig aufgebaut sein.

Bevorzugt enthält das Blockcopolymer A2 mindestens 2 endständige Blöcke S. Besonders bevorzugt ist das Blockcopolymer A2 ein Triblockcopolymer enthaltend 2 endständige Blöcke S, insbesondere ein Triblockcopolymer enthaltend 2 endständige Blöcke S und dazwischen einen oder mehrere, vorzugsweise statistisch aufgebauten, Block B/S. Besonders bevorzugt ist das Blockcopolymer A2 ein lineares Triblockcopolymer der Struktur S-B/S-S, wobei der Block B/S, vorzugsweise statistisch, aus Struktureinheiten von einem konjugierten Dien, insbesondere Butadien, und Struktureinheiten von mindestens einem vinylaromatischen Comonomeren, insbesondere Styrol aufgebaut ist.

Bevorzugt ist das Vinylaromat-Dien-Blockcopolymer (A2) ein Blockcopolymer enthaltend Struktureinheiten von Styrol und Butadien.

Der Anteil von Dien-Struktureinheiten, insbesondere Butadien-Struktureinheiten, - bezogen auf das Vinylaromat-Dien-Blockcopolymer (A2) - beträgt oft 25 bis 50 Gew.-%, oft bevorzugt 30 bis 40 Gew.-%. Entsprechend beträgt oft der Anteil von Vinylaromat-Struktureinheiten, insbesondere Styrol-Struktureinheiten - bezogen auf das Vinylaromat-Dien-Blockcopolymer (A2) - 50 bis 75 Gew.-%, oft bevorzugt 60 bis 70 Gew.-%.

Die Weichphase der Komponente A2 liegt fein dispergiert in der Hartmatrix der Komponente A2 vor.

Der Anteil der Weichphase, bezogen auf das Blockcopolymer A2, beträgt oft 60 bis 95 Vol.%, oft bevorzugt 60 bis 80 Vol.-%, oft besonders bevorzugt 65 bis 75 Vol.%. Dementsprechend beträgt oft der Anteil der Hartphase, bezogen auf das Blockcopolymer A2, 5 bis 40 Vol.%, oft bevorzugt 20 bis 40 Vol.-%, oft besonders bevorzugt 25 bis 35 Vol.%.

Der mindestens eine, vorzugsweise statistisch aufgebaute, Copolymerblock (B/S), besteht oft aus 30 bis 70 Gew.-%, oft bevorzugt 30 bis 50 Gew.-%, vinylaromatischen Monomeren, insbesondere Styrol, und 30 bis 70 Gew.-%, oft bevorzugt 50 bis 70 Gew.-%, Dien, insbesondere 1,3-Butadien.

Der mindestens eine Block S weist bevorzugt ein zahlenmittleres Molekulargewicht Mn im Bereich von 10.000 bis 50.000 g/mol auf.

Der mindestens eine Block B oder B/S, bevorzugt B/S, weist bevorzugt ein zahlenmittleres Molekulargewicht Mn im Bereich von 30.000 bis 200.000 g/mol auf.

Die vorgenannten Blockcopolymere A2) werden üblicherweise durch anionische Polymerisation, insbesondere ein anionisches Lösungspolymerisationsverfahren mit einer Alkyl-Lithium-Verbindung als Initiator, erhalten. Die Herstellung von linearen und sternförmigen Blockcopolymeren durch anionische Lösungspolymerisation ist bekannt (s. z.B. WO 95/353335 A1, S. 5, Z. 38 bis S. 6, Z. 47).

Die Herstellung der statistischen Weichblöcke B/S erfolgt in Gegenwart eines Randomizers. Als Randomizer eignen sich Donorlösungsmittel, wie Ether, z.B. Tetrahydrofuran, oder tert.-Amine oder bevorzugt lösliche Kaliumsalze wie z.B. Kaliumalkoholate, insbesondere ein Kaliumalkoholat eines tertiären Alkohols mit mindestens 5 Kohlenstoffatomen.

Geeignete Styrol-Butadien-Blockcopolymere (A2) sind als Styroflex^{®} 2G 66 von der Firma Ineos Styrolution (Frankfurt, Germany) kommerziell erhältlich.

### Komponente A3)

Als Schmier- und/oder Gleitmittel (A3) (= Komponente A3) lassen sich prinzipiell alle niedermolekularen Stoffe verwenden, die in der erforderlichen Menge mit den Komponenten A1, A2 und gegebenenfalls A4 in der Formmasse verträglich sind. Hierzu zählen z.B. Mineralöle, aromatische oder aliphatische Alkohole oder Ester, wie Dodecylakohol, Butylstearat, Di-ethylhexyl-phthalat usw.

Ferner seien genannt Ethylenoxid-Propylenoxid-Blockcopolymere; Micro-Hartwachse; Ethylen-bis-Stearylamid (Acrawachs); Metallseifen, insbesondere der Erdalkalien und des Zinks; Mineralöle auf Basis von insbesondere naphthenischen und paraffinischen Kohlenwasserstoffen (insbesondere die technischen und medizinischen Weißöle); Silikonöle mit Viskositäten im Bereich von 0,5 bis 50.000 mPas.

### Komponente A4)

Als Komponente A4) kann mindestens ein - von A3) verschiedenes - Additiv und/oder Hilfsmittel (A4) enthalten sein. Oft werden als Komponente A4) Stabilisatoren, Entformungsmittel, Antistatica, Antioxidantien, Pigmente und/oder Füllstoffe eingesetzt. Bevorzugt eingesetzt werden Stabilisatoren.

### Polymerschicht (B)

Die im Bedarfsfall verwendete Polymerschicht (B) der erfindungsgemäßen siegelfähigen Mehrschichtfolie ist als Träger oder Trägerfolie der heißsiegelfähigen Mehrschichtfolie zu bezeichnen. Polymerschicht (B) ist von den Polymerschichten (A) und (C) verschieden und enthält mindestens eine Komponente (B1) ausgewählt aus der Gruppe bestehend aus: schlagfestem Polystyrol, Vinylaromat-Dien- (insbesondere Styrol-Butadien) Blockcopolymeren, und Mischungen aus Styrol-Homopolymeren oder Vinylaromat-Dien-(insbesondere Styrol-Butadien) Pfropfcopolymeren mit Vinylaromat-Dien-(insbesondere Styrol-Butadien) Blockcopolymeren. Auf den vorgenannten Materialien haftet die heißsiegelfähige Polymerschicht (A) auch ohne Klebstoff bzw. Haftvermittler.

Als Komponente (B1) wird schlagfestes Polystyrol aufgebaut aus einer Hartmatrix (Hartphase) und einer elastomeren Weichphase bevorzugt. Das schlagfeste Polystyrol ist insbesondere ein hochschlagzähes Polystyrolharz.

In diesem Fall ist die Hartmatrix aus dem Polymeren eines monovinylaromatischen Monomeren aufgebaut. Der Anteil der Hartmatrix beträgt, bezogen auf die Komponente B1, 60 bis 95 Gew.-%, vorzugsweise 70 bis 90 Gew.-%. Als monovinylaromatisches Monomeres wird insbesondere Styrol verwendet, aber auch substituierte Styrole oder Copolymere von Styrol mit anderen geeigneten Monomeren wie Maleinsäureanhydrid oder Methylmethacrylat sind als Hartmatrix verwendbar.

Die entsprechende Weichphase der Komponente (B1) wird auf die übliche Weise in der Hartmatrix fein dispergiert und ist in einem Anteil von 5 bis 40 Gew.-%, bevorzugt 8 bis 20 Gew.-%, bezogen auf (B1), in der Hartmatrix vorhanden.

Die Weichphase der Komponente (B1) weist z.B. eine mittlere Teilchengröße im Bereich von 0,3 bis 10 µm auf.

Bei der Weichphase handelt es sich um ein Pfropfcopolymer aus dem bzw. den Monomeren der Hartmatrix, d.h. insbesondere von Styrol, auf mindestens einen Kautschuk und/oder mindestens ein elastomeres linear oder sternförmig aufgebautes Vinylaromat/Dien-Blockcopolymer, wie z.B. Polybutadien und/oder ein elastomeres linear oder sternförmig aufgebautes Styrol-Butadien-Blockcopolymer.

Das elastomere linear oder sternförmig aufgebaute Vinylaromat/Dien-Blockcopolymer kann ein Di-, Tri- oder Multi-Blockcopolymer, bevorzugt ein lineares Diblockcopolymer des Typs A-B, sein.

Bevorzugt als Weichphase ist z.B. Polybutadien bzw. dessen Pfropfcopolymer mit vorzugsweise Styrol. Als Pfropfgrundlage sind im allgemeinen Polymere mit 4 bis 5 C-Atomen geeignet; insbesondere geeignet ist Polybutadien vom medium- oder high-cis-Typ mit einem Molekulargewicht (Gewichtsmittel) im Bereich von 50000 bis 450000 g/mol. Vorzugsweise wird medium-cis-Polybutadien mit einem Molgewicht von 100000 bis 400000 g/mol eingesetzt.

Als Weichphase können weiterhin Vinylaromat-Dien-Blockcopolymere, insbesondere Styrol-Butadien-Blockcopolymere verwendet werden. Diese können allein oder zusätzlich zu den Pfropfcopolymeren eingesetzt werden.

Beispiele sind Zwei-Blockcopolymere A-B aus einem Styrol-Block A und einem Polybutadienblock B. Das Zweiblockcopolymer kann z.B. einen Blockstyrolgehalt von 30 bis 90 Gew.-% aufweisen, der Rest ist Butadien.

Wenn ein Gemisch aus Polydien und elastomerem linear oder sternförmig aufgebauten Block-Copolymer verwendet wird, gilt als Polydien die gesamte Menge aus z.B. Polybutadien und z.B. dem Butadienanteil im Blockcopolymer. Die Gesamtmenge an Polydien soll, bezogen auf die Komponente B1, im Bereich von 4 bis 40 Gew.-%, vorzugsweise bei 4 bis 20 Gew.-% liegen.

Als Komponente (B1) besonders bevorzugt wird schlagfestes Polystyrol, das nach dem in der DE-AS 17 70 392 beschriebenen Verfahren hergestellt worden ist.

Die Polymerschicht (B) kann ferner 0 bis 8 Gew.-% - bezogen auf (B) - eines oder mehrerer üblicher Additive und/oder Hilfsmittel (B2) - wie zuvor für Komponente (A3) und/oder (A4) beschrieben - enthalten.

Bevorzugt enthält Polymerschicht (B) als Komponente (B2) kein Additiv und/oder Hilfsmittel gemäß Komponente (A3).

### Polymerschicht (C)

Die Polymerschicht (C) ist von den Polymerschichten (A) und (B) verschieden und weist eine Schmelztemperatur von mindestens 170 °C auf.

Polymerschicht (C) soll hochschmelzend sein und das Kleben der Heißsiegelfolie (Polymerschicht (A)) am Siegelkopf verhindern.

Polymerschicht (C) der Mehrschichtfolie ersetzt aber nicht nur einen Schutzlack, sondern sie erhöht auch die Verarbeitungsbreite der siegelfähigen Mehrschichtfolie in einem Maße, dass selbst bei sehr hohen Siegeltemperaturen und Siegelzeiten ein Wegfließen der Trägerschicht verhindert wird und so erst eine störungsfreie Verarbeitung und eine problemlose Anwendung der Heißsiegelfolie ermöglicht wird.

Für Polymerschicht (C) der erfindungsgemäßen heißsiegelfähigen Mehrschichtfolien sind thermoplastische Polymere (Komponente C1) geeignet, deren Schmelztemperatur (Tₘ) mindestens 170°C, bevorzugt mindestens 200°C, beträgt. Somit sind als Komponente (C1) z.B. die nachstehend beispielhaft aufgeführten Polymere geeignet:
Polyamid 6 (= Polycaprolactam, Tₘ: 220°C)
Polyamid 6.6 (= Polyhexamethylenadipinamid, Tₘ: 255°C)
Polyamid copolymerisiert mit Butylenterephthalsäureester (Basis: Hexamethylendiamin, Caprolactam, Terephthalsäure, Tₘ: 298°C)
Polybutylenterephthalat (= Kondensat aus Terephthalsäure oder Dimethylphthalsäure und 1.4-Butandiol, Tₘ: 220 bis 225°C).

Ferner seien genannt: Polyphenylenoxid (mit einer Erweichungstemperatur von mindestens 170 °C) und dessen Mischungen mit Polystyrol, Polysulfone, Polyethersulfone, Polyetherketone, LC-Polymere, Polyetherimide, kristallines Polyethylenterephthalat, Polyphenylensulfid, Polyamid-Imid-Copolymere oder Polyamide der Struktur von Polyamid 6.12, 11, 4.6 usw., sofern die Schmelztemperatur oder der Erweichungsbereich bei mindestens 170 °C, bevorzugt bei mindestens 200°C liegt.

Polymerschicht (C) kann neben Komponente (C1) optional 0 bis 20 Gew.-% - bezogen auf Polymerschicht (C) - mindestens eine - von (C1) verschiedene - mit (C1) mischbare Komponente (C2), enthalten. Geeignet als Komponente (C2) sind Polymere, die mit dem mindestens einen Polymer (C1), mischbar sind. Ferner kann Polymerschicht (C) ein oder mehrere übliche Additive und/oder Hilfsmittel (= Komponente C3) - wie zuvor für Komponente (A4) und/oder (A3) beschrieben - enthalten.

### Polymerschicht (D)

Die erfindungsgemäße Mehrschicht-Folie kann zusätzlich noch eine weitere - von (A) bis (C) verschiedene - Polymerschicht (D) umfassen.

Polymerschicht (D) ist eine Funktionsschicht wie z.B. ein Klebstoff oder Haftvermittler (HV), eine Gas- oder Wasserdampfsperre, eine lichtundurchlässige oder eingefärbte Schicht, eine Schicht mit anti-elektrostatischer Ausrüstung, mit verbesserter Bedruckbarkeit oder verbesserter Kratzfestigkeit, oder mit hoher Schlagfestigkeit usw.

Je nach Art der Polymerschichten (B) und (C) kann zur festen Verbindung der einzelnen Polymerschichten (A) und (C), oder, falls (B) vorhanden, der einzelnen Polymerschichten (A), (B) und (C), ein - bevorzugt thermoplastischer - Klebstoff oder Haftvermittler (HV) notwendig sein.

Für die Verbindung von (A) mit (B) sind erfahrungsgemäß dann keine HV notwendig, wenn (B) ein nur aus Styrol und Butadien aufgebautes Polymer mit unter 15 % weiterer Comonomerer ist.

Polymerschicht (D) enthält oftmals Copolymere mit funktionellen Gruppen wie z.B. Copolymere enthaltend Struktureinheiten abgeleitet von Maleinsäureanhydrid - z.B. Ethylen-Vinylacetat-Maleinsäureanhydrid-Copolymere und/oder Styrol-Maleinsäureanhydrid-Copolymere -, oder Copolymere enthaltend Struktureinheiten abgeleitet von Glycidyl(meth)acrylat.

Polymerschicht (A) oder, falls vorhanden, Polymerschicht (B) kann vorteilhaft mit Hilfe solcher funktionelle Gruppen enthaltender Copolymere mit einer Polymerschicht (C) basierend auf Polyamid oder auf Polyestern - wie z.B. Polyethylenterephthalat, Polybutylenterephthalat - verbunden werden.

Gemäß einer weiteren Ausführungsform kann Polymerschicht (D) Styrol-Butadien- oder Styrol-Isopren-Blockcopolymere enthalten, die beispielsweise hilfreich sind, um verschiedene Styrolpolymer-haltige Schichten wie z.B. (A) und (B) besser miteinander verträglich zu machen und die sogenannte "Delaminationsneigung" zu reduzieren.

Polymerschicht (D) der erfindungsgemäßen, heißsiegelfähigen Mehrschichtfolie kann z.B. auch eine weitere, als Gas- oder Wasserdampfsperre eingebaute Schicht aus einem Thermoplasten mit hoher Gas- und/oder Wasserdampfdichte sein. Diese Schicht schützt das Füllgut z.B. vor Austrocknen oder vor Beeinflussung durch Sauerstoff. Beispiele sind Schichten aus Ethylen-Vinylalkohol-Copolymerisaten, die eine hohe Gasdichtigkeit haben oder aus thermoplastisch verarbeitbaren PVDC-Copolymerisaten mit hoher Gas- und Wasserdampfdichte usw. Eine solche Schicht ist, wenn nötig, ebenfalls mit einem geeigneten Haftvermittler mit den benachbarten Komponenten zu verbinden.

Als Polymerschicht (D) ist ferner eine eigene, weitgehend lichtundurchlässige oder sonst eingefärbte Schicht möglich, die die Füllgüter etwa vor dem Einfluss von Licht schützt. Zu diesem Zweck versetzt man ein Material z.B. gemäß den Komponenten (B1) oder (C1) mit geeigneten Pigmenten, bevorzugt Ruß oder Gemischen von Ruß mit Titandioxid bzw. weiteren Pigmenten und fügt eine zusätzliche, mit Pigmenten versehene Schicht ein; dies ermöglicht eine Haftung ohne HV.

Entsprechend kann Polymerschicht (D) z.B. eine Schicht mit anti-elektrostatischer Ausrüstung, mit verbesserter Bedruckbarkeit oder verbesserter Kratzfestigkeit, oder mit hoher Schlagfestigkeit usw. sein.

Bevorzugt enthält Polymerschicht (D) mindestens eine Komponente (D1) ausgewählt aus: Haftvermittlern, bevorzugt thermoplastischen Haftvermittlern, insbesondere auf Basis von Copolymeren enthaltend Struktureinheiten von Maleinsäureanhydrid (z.B. Ethylen-Vinylacetat-Maleinsäureanhydrid-Copolymere, Styrol-Maleinsäureanhydrid-Copolymere), Copolymeren enthaltend Struktureinheiten von Glycidyl(meth)acrylat, Vinylaromat-Dien-Blockcopolymeren, und gas- und/oder wasserdampfsperrenden Materialien, bevorzugt auf Basis von Ethylen-Vinylalkohol-Copolymeren und/oder Vinylidenchloridhomo- oder copolymeren.

Besonders bevorzugt enthält Polymerschicht (D) als Komponente (D1) einen Haftvermittler, bevorzugt einen thermoplastischen Haftvermittler.

Ganz besonders bevorzugt ist Komponente (D1) ein thermoplastischer Haftvermittler auf Basis von Copolymeren enthaltend Struktureinheiten von Maleinsäureanhydrid wie z.B. Ethylen-Vinylacetat-Maleinsäureanhydrid-copolymere und/oder Styrol-Maleinsäureanhydrid-Copolymere, oder Copolymeren enthaltend Struktureinheiten von Glycidyl(meth)acrylat.

Oftmals besteht Polymerschicht (D) aus der mindestens einen Komponente (D1).

### Herstellung Mehrschichtfolie

Die erfindungsgemäße heißsiegelfähige Mehrschichtfolie wird bevorzugt nach dem Koextrusionsverfahren hergestellt. Dieses Verfahren ist bekannt. Die Koextrusion kann bei Temperaturen von 170°C bis 300°C erfolgen. Dabei werden die Komponenten der einzelnen Polymerschichten (A) und (C), sowie gegebenenfalls (B) und/oder (D), in verschiedenen Extrudern (d.h. Komponenten der Polymerschicht (A) in Extruder (I), Komponenten der Polymerschicht (B) in Extruder (II) etc.) aufgeschmolzen, und werden dann z.B. mit Hilfe von Mehrfachbreitschlitz- oder Ringdüsen zusammengeführt. Alternativ kann die Zusammenführung der Schicht(en) z.B. in einem Adapter erfolgen.

Daneben besteht auch die Möglichkeit, eine oder mehrere Schichten durch Kaschieren auf die andere(n) extrudierten Schicht(en) aufzubringen.

Bei der Extrusion kann die Dicke der einzelnen Schichten z.B. durch Variation der Extruderdrehzahlen den Anforderungen an die fertigen Folien angepasst werden.

Von Vorteil ist, dass das Aufbringen der hochschmelzenden Polymerschicht (C) nach dem Verfahren der Coextrusion oder durch Kaschieren in einem Arbeitsgang bei der Herstellung der heißsiegelbaren Mehrschichtfolie erfolgen kann. Dadurch vermeidet man das Anbringen eines Schutzlackes in einem nachfolgenden Arbeitsgang und ferner schwer zu beseitigende Lösungsmittel.

Damit wird erreicht, dass die erfindungsgemäßen heißsiegelbaren Mehrschichtfolien praktisch in derselben Weise und auf denselben Abfüllanlagen angewendet werden können wie siegelfähige Aluminiumfolien, ohne dass langwierige Veränderungen an den Abfüllanlagen notwendig sind. Damit werden die wesentlichen Hindernisse für die Breite der Anwendung solcher siegelfähigen Polymerfolien in der Praxis beseitigt.

### Verwendung der heißsiegelbaren Mehrschichtfolie

Ein weiterer Gegenstand der Erfindung ist die Verwendung der heißsiegelbaren Mehrschichtfolie als Verschluss von Behältern (oder Verpackungen) auf Basis von Styrolpolymeren).

Die wie vorstehend beschrieben erhaltenen heißsiegelbaren Mehrschichtfolien werden auf den üblichen, für das Heißsiegeln verwendeten Siegeleinheiten auf Behälter aus Styrolpolymeren, z.B. aus Styrol-Homopolymeren, Styrol-Butadien-Pfropfcopolymeren oder -Blockcopolymeren bzw. Mischungen aus dieser Materialien aufgesiegelt. Die Behälter können auch aus anderen Styrolpolymeren bestehen, beispielsweise solchen, die einen gewissen Anteil an Copolymeren wie Acrylnitril enthalten. Sehr häufig werden für Behälter bzw. Verpackungen Mehrschichtfolien verwendet. Auch diese sind geeignet für das Verschließen mit den erfindungsgemäßen heißsiegelbaren Mehrschichtfolien, unter der Voraussetzung, dass die Innenschicht, auf die der Deckel aufgesiegelt wird, aus einem Styrolpolymer besteht, das gegen die Polymerschicht (A) der heißsiegelfähigen Mehrschichtfolie siegelt.

Die Siegelbedingungen sind bei vorgegebener Form des Siegelkopfes durch die Temperatur des Siegelkopfes, den Druck während des Siegelvorgangs und die Siegelzeit beschrieben. Die Siegelbedingungen sind sehr stark von der Dicke der siegelbaren Mehrschichtfolie abhängig. Beispielsweise kann bei 200°C Siegeltemperatur und 2 bar Siegeldruck eine 0,1 mm dicke Folie schon in 0,2 bis 0,3 sec befriedigend gesiegelt werden, während unter denselben Bedingungen eine 0,25 mm dicke Folie 0,8 bis 1 sec Siegelzeit benötigt.

Geeignete Siegelbedingungen liegen je nach Art der Polymerschicht (C) der heißsiegelbaren Mehrschichtfolie bei Drucken von 1 bis 5 bar, Siegeltemperaturen von 140°C bis 280°C und Siegelzeiten von 0,1 bis 2 sec.

Die erfindungsgemäße heißsiegelbare Mehrschichtfolie weist deutlich verbesserte organoleptische Eigenschaften auf und hat somit den Vorteil, dass der Geschmack von geschmackssensitiven Lebensmitteln nicht beeinträchtig wird.

Ein weiterer Gegenstand der Erfindung ist daher die Verwendung der heißsiegelbaren Mehrschichtfolie als Verschluss von Behältern (oder Verpackungen) auf Basis von Styrolpolymeren, die geschmackssensitive Lebensmittel enthalten.

Die Erfindung wird durch die Beispiele und Ansprüche erläutert.

### Beispiele

Nach dem Verfahren der Coextrusion wird eine siegelbare Mehrschichtfolie aus den Polymerschichten A (20 Gew.-%), B (70 Gew.-%) und C (10 Gew.-%) hergestellt.

Siegelfähige Polymerschicht A: Mischung aus 80 Gew.-% eines schlagfesten Polystyrols mit einem Butadienanteil von 8 Gew.-% [Vicat B/50: 95 °C; Schmelzindex: 5 g/10 min bestimmt nach ISO 1133 (200 °C/5 kg); mittlere Kautschukteilchengröße: 2 µm] und 20 Gew.-% eines Styrol-Butadien-Blockpolymeren mit einem Butadien-Anteil von 35 Gew.-% (Styroflex^{®} 2G66 von INEOS Styrolution).

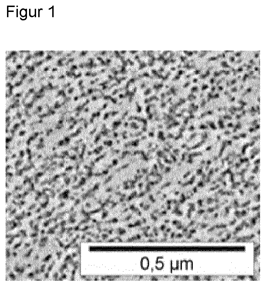

Figur 1 zeigt eine elektronenmikroskopische Aufnahme (OsO4 Kontrastierung, Vergrö-ßerung 1:50.000) der Polymerschicht A gemäß Beispiel 1. Man erkennt deutlich eine diskontinuierliche, in Polystyrol dispergierte, Weichphase aus Butadien-haltigen Segmenten zylindrischer Morphologie.

Polymerschicht B: schlagfestes Polystyrol mit 8 Gew.-% Butadienanteil, Vicat B/50 von 95 °C, Schmelzindex: 5 g/10 min bestimmt nach ISO 1133 (200 °C/5 kg) und einer mittleren Kautschukteilchengröße von 2 µm.

Polymerschicht C: Polyamid 6.6, Schmelzpunkt 260°C, bestimmt nach ISO 1218, Verfahren A.

Die Polymerschicht B wird durch einen Hauptextruder, die Polymerschichten A und C durch je einen Seitenextruder einer Mehrfach-Breitschlitzdüse zugeführt. Die Verarbeitungstemperaturen der Formmassen waren:
Polymerschicht A: 189°C; Polymerschicht B: 210°C; Polymerschicht C: 280°C.

Der Schichtaufbau der Folie war wie folgt:
Polymerschicht A: 0,05 mm; Polymerschicht B: 0,2 mm; Polymerschicht C: 0,02 mm.

Mit der hergestellten heißsiegelbaren Polymerschicht A, gegebenenfalls auch der siegelbaren Mehrschichtfolie, wurden organoleptische Untersuchungen durchgeführt.

Die organoleptischen Versuche wurden in einem 100-ml-Erlenmeyerkolben durchgeführt, der mit 10 g der Mehrschichtfolie oder 10 g der Polymerschicht A gemäß den Beispielen gefüllt war. Es wurde kochendes Wasser direkt aus dem Kessel in den Erlenmeyerkolben gegossen.

Der Wasserdampf wurde mit der Hand zur Nase geführt und von einem Gremium von mindestens 3 Personen nach folgenden Kriterien bewertet:
0 = völlig neutral; überhaupt kein Geruch
1 = leichte Geruchswahrnehmung
2 = Geruch wahrnehmbar, aber völlig akzeptabel
3 = starker Geruch, noch akzeptabel
4 = sehr starker Geruch, inakzeptabel.

Aus den Mehrschichtfolien lassen sich Behälter vorteilhaft herstellen, bei denen die Folien keinen negativen Geruch aufweisen.

## Patentansprüche

1. Heißsiegelbare Mehrschichtfolie umfassend:
a) 1 bis 50 Gew.-% einer heißsiegelbaren Polymerschicht (A),
b) 1 bis 99 Gew.-% einer Polymerschicht (C), und
c) 0 bis 95 Gew.-% einer Polymerschicht (B), wobei sich, falls vorhanden, Polymerschicht (B) zwischen Polymerschicht (A) und Polymerschicht (C) befindet, und die Anteile a), b) und c) sich jeweils auf das Gesamtgewicht der Folie beziehen, und wobei
Polymerschicht (A) enthält:
A1) 20 bis 90 Gew.-% - bezogen auf Gesamtgewicht (A) - mindestens eines schlagfesten Polystyrols (A1),
A2) 5 bis 50 Gew.-% - bezogen auf Gesamtgewicht (A) - mindestens eines Vinylaromat-Dien-Blockcopolymers (A2); und
A3) 0 bis 30 Gew.-% - bezogen auf Gesamtgewicht (A) - mindestens eines Gleit- und/oder Schmiermittels (A3), und
A4) 0 bis 10 Gew.-% - bezogen auf Gesamtgewicht (A) - von A3) verschiedene - Additive und/oder Hilfsmittel (A4); und wobei
Polymerschicht (B) von (A) und (C) verschieden ist und mindestens eine Komponente (B1) ausgewählt aus der Gruppe bestehend aus: schlagfestem Polystyrol, Vinylaromat-Dien-Blockcopolymeren, und Mischungen aus Styrol-Homopolymeren oder Vinylaromat-Dien-Propfcopolymeren mit Vinylaromat-Dien-Blockcopolymeren, enthält; und
Polymerschicht (C) von (A) und (B) verschieden ist und eine Schmelztemperatur von mindestens 170 °C aufweist; und wobei Polymerschicht (A)
(i) 66 bis 99 Vol.-% einer Hartphase, bezogen auf (A), enthaltend Struktureinheiten von mindestens einem Vinylaromatmonomer, insbesondere Styrol, und
ii) 1 bis 34 Vol.-% einer Weichphase, bezogen auf (A), enthaltend Struktureinheiten von mindestens einem konjugierten Dien, insbesondere Butadien, umfasst;
und wobei die Weichphase ii) in Form von Kugeln und/oder Zylindern vorliegt, die von der Hartphase umgeben sind.

2. Heißsiegelbare Mehrschichtfolie gemäß Anspruch 1, **dadurch gekennzeichnet, dass** Polymerschicht (A)
i) 86 bis 99 Vol.-% einer Hartphase enthaltend Struktureinheiten von mindestens einem Vinylaromatmonomer, und
ii) 1 bis 14 Vol.-% einer Weichphase enthaltend Struktureinheiten von mindestens einem konjugierten Dien umfasst.

3. Heißsiegelbare Mehrschichtfolie gemäß Anspruch 1 und 2, wobei die Weichphase ii) in Form von Kugeln und/oder Zylindern, und gegebenenfalls - mit einem Anteil von weniger als 50 Vol.-% - Lamellen, vorliegt, die jeweils einen mittleren Durchmesser (bestimmt durch Auszählen einer kontrastierten elektronenmikroskopischen Aufnahme) von 20 bis 200 nm aufweisen.

4. Heißsiegelbare Mehrschichtfolie gemäß einem der Ansprüche 1 bis 3, wobei Polymerschicht (A) aufgebaut ist aus:
A1) 40 bis 90 Gew.-%, bevorzugt 65 bis 85 Gew.-%, - bezogen auf (A) - mindestens eines schlagfesten Polystyrols (A1),
A2) 10 bis 40 Gew.-%, bevorzugt 15 bis 35 Gew.-%, - bezogen auf (A) - mindestens eines Vinylaromat-Dien-(insbesondere Styrol-Butadien) Blockcopolymers (A2); und
A3) 0 bis 20 Gew.-%, bevorzugt 0 bis 15 Gew.-%, - bezogen auf (A) - mindestens eines Gleit- und/oder Schmiermittels (A3), und
A4) 0 bis 5 Gew.-%, bevorzugt 0,01 bis 2 Gew.-%, - bezogen auf (A) - Additive und/oder Hilfsmittel (A4).

5. Heißsiegelbare Mehrschichtfolie gemäß einem der Ansprüche 1 bis 4, wobei das Vinylaromat-Dien-Blockcopolymer (A2), insbesondere Styrol-Butadien-Blockcopolymer, aufgebaut ist aus mindestens einem - eine Hartphase bildenden - Block S enthaltend Struktureinheiten von mindestens einem vinylaromatischen Monomer, und mindestens einem - eine Weichphase bildenden - Block B und/oder Block B/S, bevorzugt Block B/S, enthaltend Struktureinheiten von einem konjugierten Dien und, ferner - im Fall von Block B/S - Struktureinheiten von mindestens einem vinylaromatischen Monomer.

6. Heißsiegelbare Mehrschichtfolie gemäß Anspruch 5, wobei das Vinylaromat-Dien Blockcopolymer (A2), insbesondere Styrol-Butadien-Blockcopolymer, keinen Block B enthält und der Block B/S statistisch aufgebaut ist.

7. Heißsiegelbare Mehrschichtfolie gemäß einem der Ansprüche 5 oder 6, wobei das Vinylaromat-Dien Blockcopolymer (A2), insbesondere Styrol-Butadien-Blockcopolymer, mindestens zwei endständige Blöcke S enthält und linear oder sternförmig, bevorzugt linear, aufgebaut ist.

8. Heißsiegelbare Mehrschichtfolie gemäß einem der Ansprüche 5 bis 7, wobei der Anteil der Weichphase des Blockcopolymers (A2) 60 bis 95 Vol.%, bevorzugt 60 bis 80 Vol.-%, besonders bevorzugt 65 bis 75 Vol.%, beträgt, und der Anteil der Hartphase des Blockcopolymers (A2) 5 bis 40 Vol.%, bevorzugt 20 bis 40 Vol.-%, besonders bevorzugt 25 bis 35 Vol.%, beträgt.

9. Heißsiegelbare Mehrschichtfolie gemäß einem der Ansprüche 5 bis 8, wobei der Copolymerblock (B/S) des Vinylaromat-Dien Blockcopolymers (A2) aus 30 bis 70 Gew.-%, bevorzugt 30 bis 50 Gew.-%, Vinylaromat, insbesondere Styrol, und 30 bis 70 Gew.-%, vorzugsweise 50 bis 70 Gew.-%, Dien, insbesondere 1,3-Butadien, besteht.

10. Heißsiegelbare Mehrschichtfolie gemäß einem der Ansprüche 5 bis 9, wobei das Vinylaromat-Dien-Blockcopolymer (A2) 25 bis 50 Gew.-%, bevorzugt 30 bis 40 Gew.-%, Struktureinheiten von einem konjugierten Dien, insbesondere Butadien, und 25 bis 50 Gew.-%, bevorzugt 30 bis 40 Gew.-%, Struktureinheiten von mindestens einem Vinylaromatmonomer, insbesondere Styrol, aufweist.

11. Heißsiegelbare Mehrschichtfolie gemäß einem der Ansprüche 1 bis 10 umfassend:
(a) 3 bis 30 Gew.-%, bevorzugt 3 bis 15 Gew.-%, Polymerschicht (A),
(b) 50 bis 90 Gew.-%, bevorzugt 60 bis 90 Gew.-%, Polymerschicht (B), und
(c) 1 bis 30 Gew.-%, bevorzugt 5 bis 15 Gew.-%, Polymerschicht (C).

12. Heißsiegelbare Mehrschichtfolie gemäß einem der Ansprüche 1 bis 11, zusätzlich umfassend 1 bis 10 Gew.-%, bezogen auf das Gesamtgewicht der Folie, einer weiteren - von (A) bis (C) verschiedenen - Polymerschicht (D), die sich zwischen (A) und (C), oder (B) und (C) befindet.

13. Heißsiegelbare Mehrschichtfolie gemäß Anspruch 12, wobei Polymerschicht (D) mindestens eine Komponente (D1) ausgewählt aus: Haftvermittlern, bevorzugt thermoplastischen Haftvermittlern, insbesondere auf Basis von Copolymeren enthaltend Struktureinheiten von Maleinsäureanhydrid, Copolymeren enthaltend Struktureinheiten von Glycidyl(meth)acrylat, Vinylaromat-Dien-Blockcopolymeren, und gas- und/oder wasserdampfsperrenden Materialien, bevorzugt auf Basis von Ethylen-Vinylalkohol-Copolymeren und/oder Vinylidenchloridhomo- oder copolymeren, enthält.

14. Heißsiegelbare Mehrschichtfolie gemäß einem der Ansprüche 1 bis 13, wobei die Polymerschicht (C) mindestens ein thermoplastisches Polymer (C1) enthält ausgewählt aus der Gruppe bestehend aus: Polyestern, ein Polyamiden und Polyesteramiden.

15. Heißsiegelbare Mehrschichtfolie gemäß einem der Ansprüche 1 bis 14, wobei die Komponente (B1) der Polymerschicht (B) schlagfestes Polystyrol ist.

16. Verfahren zur Herstellung einer heißsiegelbaren Mehrschichtfolie gemäß einem der Ansprüche 1 bis 15 umfassend die Schritte:
i) Aufschmelzen der für die Polymerschicht (A) verwendeten Komponenten in einem Extruder (I), der für die Polymerschicht (C) verwendeten Komponenten in einem Extruder (II), falls vorhanden, der für die Polymerschicht (B) verwendeten Komponenten in einem Extruder (III), und falls vorhanden, der für die Polymerschicht (D) verwendeten Komponenten in einem Extruder (IV); und
ii-1) Herstellung einer Mehrschichtfolie durch Coextrusion der Polymerschichten (A), (C), gegebenenfalls (B) und/oder (D); oder
ii-2) Herstellung einer Mehrschichtfolie durch Extrusion der einzelnen Polymerschichten (A), (C), gegebenenfalls (B) und gegebenenfalls (D) und anschließendes Kaschieren der Polymerschichten aufeinander.

17. Verwendung der heißsiegelbaren Mehrschichtfolie gemäß einem der Ansprüche 1 bis 15 als Verschluss von Behältern auf Basis von Styrolpolymeren.

18. Verwendung der heißsiegelbaren Mehrschichtfolie gemäß Anspruch 17 für Behälter enthaltend geschmackssensitive Lebensmittel.

## Claims

1. A heat-sealable multilayer film comprising:
a) 1 to 50 wt% of a heat-sealable polymer layer (A),
b) 1 to 99 wt% of a polymer layer (C), and
c) 0 to 95 wt% of a polymer layer (B), where, if present, polymer layer (B) is between polymer layer (A) and polymer layer (C), and the proportions a), b) and c) are each based on the total weight of the film, and where
polymer layer (A) contains:
A1) 20 to 90 wt% - based on total weight of (A) - of at least one impact-resistant polystyrene (A1),
A2) 5 to 50 wt% - based on total weight of (A) - of at least one vinylaromatic-diene block copolymer (A2); and
A3) 0 to 30 wt% - based on total weight of (A) - of at least one glidant and/or lubricant (A3), and
A4) 0 to 10 wt% - based on total weight of (A) - of auxiliaries and additives (A4) other than A3); and where
polymer layer (B) is different than (A) and (C) and at least one component (B1) is selected from the group consisting of: impact-resistant polystyrene, vinylaromatic-diene block copolymers, and mixtures of styrene homopolymers or vinylaromatic-diene graft copolymers with vinylaromatic-diene block copolymers; and
polymer layer (C) is different than (A) and (B) has a melting temperature of at least 170°C; and where polymer layer (A) comprises
(i) 66 to 99 vol% of a hard phase, based on (A), containing structural units of at least one vinylaromatic monomer, especially styrene, and
ii) 1 to 34 vol% of a soft phase, based on (A), containing structural units of at least one conjugated diene, especially butadiene;
and where the soft phase ii) is in the form of spheres and/or cylinders surrounded by the hard phase.

2. The heat-sealable multilayer film as claimed in claim 1, **characterized in that** polymer layer (A) comprises
i) 86 to 99 vol% of a hard phase containing structural units of at least one vinylaromatic monomer, and
ii) 1 to 14 vol% of a soft phase containing structural units of at least one conjugated diene.

3. The heat-sealable multilayer film as claimed in claims 1 and 2, wherein the soft phase ii) is in the form of spheres and/or cylinders, and optionally - with a proportion of less than 50 vol% - of lamellas each having an average diameter (determined by counting from a contrasted electron micrograph) of 20 to 200 nm.

4. The heat-sealable multilayer film as claimed in any of claims 1 to 3, wherein polymer layer (A) is formed from:
A1) 40 to 90 wt%, preferably 65 to 85 wt%, - based on (A) - of at least one impact-resistant polystyrene (A1),
A2) 10 to 40 wt%, preferably 15 to 35 wt%, - based on (A) - of at least one vinylaromatic-diene (especially styrene-butadiene) block copolymer (A2); and
A3) 0 to 20 wt%, preferably 0 to 15 wt%, - based on (A) - of at least one glidant and/or lubricant (A3), and
A4) 0 to 5 wt%, preferably 0.01 to 2 wt%, - based on (A) - of additives and/or auxiliaries (A4).

5. The heat-sealable multilayer film as claimed in any of claims 1 to 4, wherein the vinylaromatic-diene block copolymer (A2), especially styrene-butadiene block copolymer, is formed from at least one block S - which forms a hard phase - containing structural units of at least one vinylaromatic monomer, and at least one block B and/or block B/S, preferably block B/S - which forms a soft phase - containing structural units of a conjugated diene and also - in the case of the B/S block - structural units of at least one vinylaromatic monomer.

6. The heat-sealable multilayer film as claimed in claim 5, wherein the vinylaromatic-diene block copolymer (A2), especially styrene-butadiene block copolymer, does not contain a B block and the B/S block is constructed randomly.

7. The heat-sealable multilayer film as claimed in either of claims 5 and 6, wherein the vinylaromatic-diene block copolymer (A2), especially styrene-butadiene block copolymer, contains at least two terminal blocks S and has a linear or star-shaped, preferably linear, construction.

8. The heat-sealable multilayer film as claimed in any of claims 5 to 7, wherein the proportion of the soft phase of the block copolymer (A2) is 60 to 95 vol%, preferably 60 to 80 vol%, more preferably 65 to 75 vol%, and the proportion of the hard phase of the block copolymer (A2) is 5 to 40 vol%, preferably 20 to 40 vol%, more preferably 25 to 35 vol%.

9. The heat-sealable multilayer film as claimed in any of claims 5 to 8, wherein the copolymer block (B/S) of the vinylaromatic-diene block copolymer (A2) consists of 30 to 70 wt%, preferably 30 to 50 wt%, of vinylaromatic, especially styrene, and 30 to 70 wt%, preferably 50 to 70 wt%, of diene, especially 1,3-butadiene.

10. The heat-sealable multilayer film as claimed in any of claims 5 to 9, wherein the vinylaromatic-diene block copolymer (A2) includes 25 to 50 wt%, preferably 30 to 40 wt%, of structural units of a conjugated diene, especially butadiene, and 25 to 50 wt%, preferably 30 to 40 wt%, of structural units of at least one vinylaromatic monomer, especially styrene.

11. The heat-sealable multilayer film as claimed in any of claims 1 to 10 comprising:
(a) 3 to 30 wt%, preferably 3 to 15 wt%, of polymer layer (A),
(b) 50 to 90 wt%, preferably 60 to 90 wt%, of polymer layer (B), and
(c) 1 to 30 wt%, preferably 5 to 15 wt%, of polymer layer (C).

12. The heat-sealable multilayer film as claimed in any of claims 1 to 11, additionally comprising 1 to 10 wt%, based on the total weight of the film, of a further polymer layer (D) - other than (A) to (C) - which is between (A) and (C), or (B) and (C).

13. The heat-sealable multilayer film as claimed in claim 12, wherein polymer layer (D) contains at least one component (D1) selected from: adhesion promoters, preferably thermoplastic adhesion promoters, especially based on copolymers containing structural units of maleic anhydride, copolymers containing structural units of glycidyl (meth)acrylate, vinylaromatic-diene block copolymers, and gas barrier and/or water vapor barrier materials, preferably based on ethylene-vinyl alcohol copolymers and/or vinylidene chloride homo- or copolymers.

14. The heat-sealable multilayer film as claimed in any of claims 1 to 13, wherein the polymer layer (C) contains at least one thermoplastic polymer (C1) selected from the group consisting of: polyesters, polyamides and polyesteramides.

15. The heat-sealable multilayer film as claimed in any of claims 1 to 14, wherein component (B1) of the polymer layer (B) is impact-resistant polystyrene.

16. A process for producing a heat-sealable multilayer film as claimed in any of claims 1 to 15, comprising the steps of:
i) melting the components used for polymer layer (A) in an extruder (I), the components used for polymer layer (C) in an extruder (II), if present, the components used for polymer layer (B) in an extruder (III), and, if present, the components used for polymer layer (D) in an extruder (IV); and
ii-1) producing a multilayer film by coextruding polymer layers (A), (C), and optionally (B) and/or (D); or
ii-2) producing a multilayer film by extruding the individual polymer layers (A), (C), optionally (B) and optionally (D), and then laminating the polymer layers to one another.

17. The use of the heat-sealable multilayer film as claimed in any of claims 1 to 15 as closure of vessels based on styrene polymers.

18. The use of the heat-sealable multilayer film as claimed in claim 17 for vessels containing taste-sensitive foods.

## Revendications

1. Feuille multicouche thermoscellable comprenant :
a) 1 à 50 % en poids d'une couche polymère thermoscellable (A),
b) 1 à 99 % en poids d'une couche polymère (C), et
c) 0 à 95 % en poids d'une couche polymère (B),
si elle est présente, la couche polymère (B) se trouvant entre la couche polymère (A) et la couche polymère (C), et les proportions de a), b) et c) étant chacune rapportées au poids total de la feuille, et
la couche polymère (A) contenant :
A1) 20 à 90 % en poids - par rapport au poids total de (A) - d'au moins un polystyrène résistant au choc (A1),
A2) 5 à 50 % en poids - par rapport au poids total de (A) - d'au moins un copolymère à blocs vinylaromatique-diène (A2) ; et
A3) 0 à 30 % en poids - par rapport au poids total de (A) - d'au moins un agent de glissement et/ou d'un lubrifiant (A3), et
A4) 0 à 10 % en poids - par rapport au poids total de (A) - d'additifs et/ou d'adjuvants (A4) différents de A3) ; et
la couche polymère (B) étant différente de (A) et de (C), et contenant au moins un composant (B1) choisi dans le groupe consistant en le polystyrène résistant au choc, les copolymères à blocs vinylaromatique-diène et les mélanges d'homopolymères du styrène ou de copolymères greffés vinylaromatique-diène avec des copolymères à blocs vinylaromatique-diène ; et
la couche polymère (C) étant différente de (A) et de (B) et présentant une température de fusion d'au moins 170 °C, et la couche polymère (A) comprenant
(i) 66 à 99 % en volume d'une phase dure, par rapport à (A), contenant des motifs structuraux d'au moins un monomère vinylaromatique, en particulier le styrène, et
(ii) 1 à 34 % en volume d'une phase molle, par rapport à (A), contenant des motifs structuraux d'au moins un diène conjugué, en particulier le butadiène ;
et la phase molle ii) se présentant sous forme de billes et/ou de cylindres qui sont entourés de la phase dure.

2. Feuille multicouche thermoscellable selon la revendication 1, **caractérisée en ce que** la couche polymère (A) comprend
i) 86 à 99 % en volume d'une phase dure contenant des motifs structuraux d'au moins un monomère vinylaromatique, et
ii) 1 à 14 % en volume d'une phase molle contenant des motifs structuraux d'au moins un diène conjugué.

3. Feuille multicouche thermoscellable selon les revendications 1 et 2, la phase molle ii) se présentant sous forme de billes et/ou de cylindres et éventuellement - avec une proportion inférieure à 50 % en volume - de lamelles, dont chacun a un diamètre moyen (déterminé par comptage d'une image au microscope électronique à contraste) de 20 à 200 nm.

4. Feuille multicouche thermoscellable selon l'une des revendications 1 à 3, la couche polymère (A) étant constituée de
A1) 40 à 90 % en poids, de préférence 65 à 85 % en poids - par rapport à (A) - d'au moins un polystyrène résistant au choc (A1),
A2) 10 à 40 % en poids, de préférence 15 à 35 % en poids - par rapport à (A) - d'au moins un copolymère à blocs vinylaromatique-diène (en particulier styrène-butadiène) (A2) ; et
A3) 0 à 20 % en poids, de préférence 0 à 15 % en poids - par rapport à (A) - d'au moins un agent de glissement et/ou d'un lubrifiant (A3), et
A4) 0 à 5 % en poids, de préférence 0,01 à 2 % en poids - par rapport à (A) - d'additifs et/ou d'adjuvants (A4).

5. Feuille multicouche thermoscellable selon l'une des revendications 1 à 4, le copolymère à blocs vinylaromatique-diène (A2), en particulier le copolymère à blocs styrène-butadiène, étant constitué d'au moins un bloc S - formant une phase dure - contenant des motifs structuraux d'au moins un monomère vinylaromatique, et d'au moins un bloc B et/ou d'un bloc B/S, de préférence d'un bloc B/S - formant une phase molle - contenant des motifs structuraux d'un diène conjugué et en outre - dans le cas d'un bloc B/S - des motifs structuraux d'au moins un monomère vinylaromatique.

6. Feuille multicouche thermoscellable selon la revendication 5, le copolymère à blocs vinylaromatique-diène (A2), en particulier le copolymère à blocs styrène-butadiène, ne contenant aucun bloc B, et le bloc B/S ayant une structure statistique.

7. Feuille multicouche thermoscellable selon l'une des revendications 5 ou 6, le copolymère à blocs vinylaromatique-diène (A2), en particulier le copolymère à blocs styrène-butadiène, contenant au moins deux blocs terminaux S et ayant une structure linéaire ou en étoile, de préférence linéaire.

8. Feuille multicouche thermoscellable selon l'une des revendications 5 à 7, la proportion de la phase molle du copolymère à blocs (A2) étant de 60 à 95 % en volume, de préférence de 60 à 80 % en volume, d'une manière particulièrement préférée de 65 à 75 % en volume, et la proportion de la phase dure du copolymère à blocs (A2) étant de 5 à 40 % en volume, de préférence de 20 à 40 % en volume, d'une manière particulièrement préférée de 25 à 35 % en volume.

9. Feuille multicouche thermoscellable selon l'une des revendications 5 à 8, le bloc copolymère (B/S) du copolymère à blocs vinylaromatique-diène (A2) étant constitué de 30 à 70 % en poids, de préférence de 30 à 50 % en poids d'un vinyle aromatique, en particulier de styrène, et de 30 à 70 % en poids, de préférence de 50 à 70 % en poids d'un diène, de préférence le 1,3-butadiène.

10. Feuille multicouche thermoscellable selon l'une des revendications 5 à 9, le copolymère à blocs vinylaromatique-diène (A2) comportant 25 à 50 % en poids, de préférence 30 à 40 % en poids de motifs structuraux d'un diène conjugué, de préférence le butadiène, et 25 à 50 % en poids, de préférence 30 à 40 % en poids de motifs structuraux d'au moins un monomère vinyle aromatique, en particulier le styrène.

11. Feuille multicouche thermoscellable selon l'une des revendications 1 à 10, comprenant
(a) 3 à 30 % en poids, de préférence 3 à 15 % en poids de la couche polymère (A),
(b) 50 à 90 % en poids, de préférence 60 à 90 % en poids de la couche polymère (B), et
(c) 1 à 30 % en poids, de préférence 5 à 15 % en poids de la couche polymère (C).

12. Feuille multicouche thermoscellable selon l'une des revendications 1 à 11, comprenant en outre 1 à 10 % en poids, par rapport au poids total de la feuille, d'une autre couche polymère (D) - différente de (A) à (C) -, qui se trouve entre (A) et (C) ou entre (B) et (C) .

13. Feuille multicouche thermoscellable selon la revendication 12, la couche polymère (D) contenant au moins un composant (D1) choisi parmi les promoteurs d'adhérence, de préférence les promoteurs d'adhérence thermoplastiques, en particulier à base de copolymères contenant des motifs structuraux d'anhydride maléique, de copolymères contenant des motifs structuraux de (méth)acrylate de glycidyle, de copolymères à blocs vinylaromatique-diène et de matériaux barrières aux gaz et/ou à la vapeur d'eau, de préférence à base de copolymères éthylène-alcool vinylique et/ou d'homo- ou de copolymères de chlorure de vinylidène.

14. Feuille multicouche thermoscellable selon l'une des revendications 1 à 13, la couche polymère (C) contenant au moins un polymère thermoplastique (C1) choisi dans le groupe consistant en les polyesters, les polyamides et les polyesteramides.

15. Feuille multicouche thermoscellable selon l'une des revendications 1 à 14, le composant (B1) de la couche polymère (B) étant un polystyrène résistant au choc.

16. Procédé de fabrication d'une feuille multicouche thermoscellable selon l'une des revendications 1 à 15, comprenant les étapes suivantes :
i) fusion des composants utilisés pour la couche polymère (A) dans une extrudeuse (I), des composants utilisés pour la couche polymère (C) dans une extrudeuse (II), s'ils sont présents, des composants utilisés pour la couche polymère (B) dans une extrudeuse (III) et, s'ils sont présents, des composants utilisés pour la couche polymère (D) dans une extrudeuse (IV) ; et
ii-1) fabrication d'une feuille multicouche par coextrusion des couches polymères (A), (C), éventuellement (B) et/ou (D) ; ou
ii-2) fabrication d'une feuille multicouche par extrusion des couches polymères individuelles (A), (C), éventuellement (B) et éventuellement (D), puis contrecollage des couches polymères les unes sur les autres.

17. Utilisation de la feuille multicouche thermoscellable selon l'une des revendications 1 à 15 en tant qu'obturation de récipients à base de polymères de styrène.

18. Utilisation de la feuille multicouche thermoscellable selon la revendication 17 pour des récipients contenant des produits alimentaires organoleptiques.
